# EUROPÄISCHE PATENTANMELDUNG

(11) **EP 4 350 466 A1**
(43) Veröffentlichungstag der Anmeldung: **10.04.2024**
(21) Anmeldenummer: 23191156.1
(22) Anmeldetag: 11.08.2023
(51) Int. Cl.: G05D 23/19

(54) **KONTROLLSYSTEM UND HEIZSYSTEM**

(30) Priorität: 07.10.2022 DE 102022126020
(71) Anmelder: E.ON SE, 45131 Essen (DE)
(72) Erfinder: Queißner, Christian Hannes, 07751 Großlöbichau (DE); Geldmacher, Dr. Jan, 44227 Dortmund (DE); Reinelt, Dr. Jens, 44797 Bochum (DE)
(74) Vertreter: Bals & Vogel Patentanwälte PartGmbB

(57) **Zusammenfassung**

Die Erfindung betrifft ein Kontrollsystem (10) zum Kontrollieren einer Heizvorrichtung (100) für ein Bauwerk (170), das Kontrollsystem (10) aufweisend eine Ermittlungsvorrichtung (20) zum Ermitteln zumindest eines Widerstandwerts (112) einer Außentemperaturvorrichtung (110) der Heizvorrichtung (100) und eine Kontrollvorrichtung (40) zum Kontrollieren der Heizvorrichtung (100) durch Anpassen des zumindest einen Widerstandwerts (112) um zumindest einen Offset-Wert (114). Ferner betrifft die Erfindung ein Heizsystem (140) zum Heizen eines Bauwerks (170), das Heizsystem (140) umfassend eine Heizvorrichtung (100) und ein Kontrollsystem (10).

## Beschreibung

Die vorliegende Erfindung betrifft ein Kontrollsystem zum Kontrollieren einer Heizvorrichtung für ein Bauwerk. Auch betrifft die Erfindung ein Heizsystem mit einer Heizvorrichtung und einem Kontrollsystem zum Heizen eines Bauwerks.

Die derzeitig im Stand der Technik öffentlich bekannten Heizvorrichtungen für Bauwerke weisen zumeist eine Außentemperaturvorrichtung zur Erfassung einer Außentemperatur auf. Für die Messung der Außentemperatur sind verschiedene Arten von Temperatursensoren, je nach Hersteller und Anlagentyp, bekannt. Basierend auf der Außentemperatur wird zumeist ein fix an der Heizvorrichtung eingestelltes Profil in Form einer Heizkurve abgefahren. Diese Heizkurve gibt zumeist an, welche Vorlauftemperatur in Abhängigkeit von der Außentemperatur an der Anlage gefahren wird. Eingestellt wird diese Heizkurve in der Regel nur einmalig bei der Installation der Heizvorrichtung. Hierbei werden Annahmen getroffen, die im weiteren zeitlichen Verlauf der Heizvorrichtung und/oder des Bauwerks jedoch nicht oder nur selten validiert werden.

Es ist daher Aufgabe der vorliegenden Erfindung, die oben beschriebenen Nachteile im Stand der Technik beim Kontrollieren einer Heizvorrichtung für ein Bauwerk zu beheben oder zumindest teilweise zu beheben. Insbesondere ist es Aufgabe der Erfindung, ein Kontrollsystem bereitzustellen, mit dem ein Kontrollieren einer Heizvorrichtung für ein Bauwerk besonders einfach ermöglicht wird, insbesondere welches einen effizienten Betrieb der Heizvorrichtung ermöglicht. Insbesondere ist es ferner die Aufgabe der Erfindung, ein Heizsystem mit einer Heizvorrichtung und einem Kontrollsystem zum Heizen eines Bauwerks bereitzustellen.

Die voranstehende Aufgabe wird durch die Patentansprüche gelöst. Insbesondere wird die Aufgabe gelöst durch ein Kontrollsystem mit den Merkmalen des unabhängigen Anspruchs 1. Ferner wird die Aufgabe gelöst durch ein Heizsystem mit den Merkmalen des unabhängigen Anspruchs 11. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Kontrollsystem beschrieben sind, selbstverständlich auch im Zusammenhang mit dem erfindungsgemäßen Heizsystem und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch ein Kontrollsystem zum Kontrollieren einer Heizvorrichtung für ein Bauwerk. Das Kontrollsystem weist eine Ermittlungsvorrichtung zum Ermitteln zumindest eines Widerstandwerts einer Außentemperaturvorrichtung der Heizvorrichtung und eine Kontrollvorrichtung zum Kontrollieren der Heizvorrichtung auf. Das Kontrollieren der Heizvorrichtung erfolgt durch Anpassen des zumindest einen Widerstandwerts um zumindest einen Offset-Wert durch die Kontrollvorrichtung.

Die Heizvorrichtung ist im Rahmen der Erfindung bevorzugt als Bauwerksheizung zu verstehen und insbesondere zur Wärmeversorgung eines Bauwerks ausgestaltet. Die Heizvorrichtung ist beispielhaft als Gas- und/oder Ölheizung ausgestaltet. Eine Heizvorrichtung ist im Rahmen der Erfindung als Vorrichtung zur Erzeugung von Wärme, insbesondere aus einer Energiequelle, bevorzugt aus einem Brennstoff, zu verstehen. Gegenteilig ist eine Heizvorrichtung im Rahmen der Erfindung bevorzugt nicht als Vorrichtung zum Wärmetausch, beispielsweise gemäß einem Heizkörper, zu verstehen. Als Bauwerk ist bevorzugt eine bautechnische Vorrichtung, eine Immobilie, eine Liegenschaft, ein Gebäude, eine Vielzahl an Räumen und/oder eine Halle zu verstehen. Erfindungsgemäß ist das Kontrollsystem besonders vorteilhaft zur Nachrüstung von Bestandsheizungen verwendbar. Ein bevorzugtes Ziel der Erfindung ist es, für möglichst viele Heizvorrichtungen einen verbesserten, effizienteren und/oder günstigeren Betrieb und somit bevorzugt einen verringerten Energieeinsatz zu ermöglichen. Das Kontrollsystem wird zum Kontrollieren der Heizvorrichtung bevorzugt an der Heizvorrichtung installiert und/oder befestigt, um die Heizvorrichtung zu kontrollieren. Bevorzugt wird die Kontrollvorrichtung an und/oder in eine Leitung der Außentemperaturvorrichtung der Heizvorrichtung angeschlossen und/oder zwischengeschaltet.

Wie in der Einleitung beschrieben heizen bekannte Heizvorrichtungen zumeist in Abhängigkeit von einem gemessenen Widerstandswert einer Außentemperaturvorrichtung. Das erfindungsgemäße Kontrollsystem ermöglicht, dass zumindest ein Widerstandwert einer Außentemperaturvorrichtung der Heizvorrichtung durch eine Ermittlungsvorrichtung des Kontrollsystems ermittelt wird. Das Ermitteln des zumindest einen Widerstandwerts erfolgt bevorzugt als Strom- und/oder Spannungsmessung durch die Ermittlungsvorrichtung. Bevorzugt wird eine Vielzahl an Widerstandswerten, insbesondere über die Zeit, ermittelt. Das Betriebsverhalten der Heizvorrichtung ist daraufhin durch das Kontrollsystem kontrollierbar, indem ein Anpassen des zumindest einen Widerstandwerts um zumindest einen Offset-Wert durch die Kontrollvorrichtung erfolgt.

Anschaulich formuliert wird durch die Kontrollvorrichtung und durch das Anpassen des zumindest einen Widerstandwerts um zumindest einen Offset-Wert der Heizvorrichtung eine veränderte Außentemperatur simuliert und somit die Heizvorrichtung kontrolliert.

Im Rahmen der Erfindung ist das Kontrollieren bevorzugt als Steuern und/oder Regeln der Heizvorrichtung durch die Kontrollvorrichtung zu verstehen. Die Kontrollvorrichtung ist bevorzugt als zumindest abschnittsweise elektrische Schaltung ausgestaltet. Bevorzugt umfasst das Kontrollsystem, insbesondere die Kontrollvorrichtung, eine Logik- und/oder Rechnervorrichtung zur Steuerung und/oder Regelung des Kontrollsystems. Der zumindest eine Offset-Wert, um den der zumindest einen Widerstandwert durch die Kontrollvorrichtung angepasst wird, ist positiv oder negativ ausgestaltet. Bevorzugt ist die Kontrollvorrichtung ausgestaltet, eine Vielzahl an Widerstandswerten mit Offset-Werten anzupassen. Bevorzugt ist die Kontrollvorrichtung ausgestaltet, unterschiedliche Widerstandswerte mit unterschiedlichen Offset-Werten anzupassen. Anschaulich beschrieben ermöglicht das erfindungsgemäße Kontrollsystem somit eine Anpassung, insbesondere eine variable und/oder dynamische Anpassung, des Betriebsverhaltens der Heizvorrichtung durch das Kontrollsystem.

Bevorzugt ermöglicht das Kontrollsystem durch das Anpassen des zumindest einen Widerstandwerts um zumindest einen Offset-Wert durch die Kontrollvorrichtung ein möglichst optimales Verhalten der Heizung zur Minimierung des Energieeinsatzes bei Beibehaltung der benötigten Wärmeproduktion.

Durch das Anpassen des zumindest einen Widerstandwerts um zumindest einen Offset-Wert durch die Kontrollvorrichtung ist die Heizungsvorrichtung kontrollierbar und beispielsweise in einen anderen, insbesondere verbesserten, optimaleren und/oder energieeffizienteren Temperaturbereich kontrollierbar.

Darüber hinaus ist es durch das erfindungsgemäße Kontrollsystem bevorzugt möglich, die Heizvorrichtung mittels entsprechender Offset-Werte zeitvariant zu betreiben und/oder mit einer Nachtabsenkung/-abschaltung auszustatten, insbesondere auch wenn die eigentliche Regelung der Heizvorrichtung ein solches Programm und/oder einen solchen Betrieb nicht vorsieht.

Ein derart ausgestaltetes Kontrollsystem ist besonders vorteilhaft, da das Kontrollieren einer Heizvorrichtung für ein Bauwerk durch das Kontrollsystem besonders einfach ermöglicht wird. Bevorzugt ermöglicht das Kontrollsystem eine dynamische Anpassung der Heizvorrichtung an veränderte Bedingungen der Heizvorrichtung und/oder des Bauwerks. Das erfindungsgemäße Kontrollsystem ermöglicht bevorzugt eine Bereitstellung der ermittelten Informationen zum Betrieb der Heizvorrichtung und/oder des angepassten zumindest einen Widerstandwerts, eine manuelle Steuerung und/oder eine zumindest teilweise automatische Regelung der Heizvorrichtung durch das Kontrollsystem.

Gemäß einer bevorzugten Weiterentwicklung der Erfindung kann bei einem Kontrollsystem vorgesehen sein, dass das Kontrollsystem eine Erfassungsvorrichtung zum Erfassen zumindest eines Vorlauftemperaturwerts der Heizvorrichtung umfasst, wobei die Kontrollvorrichtung zum Anpassen des zumindest einen Widerstandwerts um zumindest einen Offset-Wert auf Grundlage des erfassten zumindest einen Vorlauftemperaturwerts ausgestaltet ist.

Der zumindest eine Vorlauftemperaturwert wird in und/oder an einem Vorlaufabschnitt der Heizvorrichtung erfasst. Das Erfassen des zumindest einen Vorlauftemperaturwerts ist bevorzugt als Temperaturmessung an und/oder in einer Vorlaufleitung der Heizvorrichtung, insbesondere als Temperaturmessung eines Fluides in einem Vorlaufabschnitt der Heizvorrichtung, zu verstehen.

Das Erfassen zumindest eines Vorlauftemperaturwerts der Heizvorrichtung durch eine Erfassungsvorrichtung des Kontrollsystems ermöglicht vorteilhaft ein Anpassen des zumindest einen Widerstandwerts um zumindest einen Offset-Wert auf Grundlage des erfassten zumindest einen Vorlauftemperaturwerts durch die Kontrollvorrichtung. Anschaulich beschrieben wird die Wirkung des Offset-Werts und/oder der Anpassung des zumindest einen Widerstandswerts auf den zumindest einen Vorlauftemperaturwert, insbesondere kontinuierlich und automatisch, überwacht und/oder analysiert.

Ein derart ausgestaltetes Kontrollsystem ist durch das Erfassen zumindest eines Vorlauftemperaturwerts der Heizvorrichtung durch eine Erfassungsvorrichtung des Kontrollsystems besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollsystem vorgesehen sein, dass das Kontrollsystem eine Auswertevorrichtung zum Auswerten des zumindest einen Widerstandwerts zum Kategorisieren und/oder Bestimmen der Außentemperaturvorrichtung der Heizvorrichtung umfasst.

Bevorzugt ist das Kontrollsystem, insbesondere die Auswertevorrichtung, zum Bestimmen einer Widerstandskurve der Außentemperaturvorrichtung durch das Kategorisieren und/oder Bestimmen der Außentemperaturvorrichtung ausgestaltet. Das Kategorisieren und/oder Bestimmen ist bevorzugt als Erfassen und Auswerten einer Vielzahl an Widerstandswerten der Außentemperaturvorrichtung, insbesondere über die Zeit, zu verstehen. Bevorzugt umfasst die Kontrollvorrichtung eine Speichervorrichtung zur Speicherung der Vielzahl an Widerstandswerten der Außentemperaturvorrichtung. Die Auswertevorrichtung ist zur Auswertung der Vielzahl an Widerstandswerten der Außentemperaturvorrichtung ausgestaltet. Bevorzugt umfasst das Auswerten des zumindest einen Widerstandwerts einen Vergleich mit zumindest einer Widerstandscharakteristik von wenigstens einer bekannten Außentemperaturvorrichtung, die beispielsweise auf der Speichervorrichtung oder auf einem später beschriebenen externen, verbundenen Server gespeichert ist.

Anschaulich beschrieben wird durch das Erfassen zumindest eines Widerstandwerts ein Abgleich mit typischen Verlaufskurven gängiger Außentemperaturvorrichtungen, wie beispielsweise NTC-Widerstandsvorrichtungen, RTD-Vorrichtungen, PT1000, PT100 und/oder anderen Außentemperaturvorrichtungen ermöglicht. Bevorzugt wird mittels einer entsprechenden Best-Fit-Analyse die angeschlossene Außentemperaturvorrichtung der Heizvorrichtung automatisch und verlässlich detektiert. Somit erhält man eine Verlaufskurve von Widerstandswerten zu der Außentemperaturvorrichtung über einen großen Bereich, ohne dass dafür eine vorherige Kenntnis der jeweils verbauten Außentemperaturvorrichtung notwendig ist. Somit vermeidet das erfindungsgemäße Kontrollsystem eine aufwendige manuelle Vermessung oder gar einen Umbau der Außentemperaturvorrichtung. Ein derart ausgestaltetes Kontrollsystem ist durch das Auswerten des zumindest einen Widerstandwerts zum Kategorisieren und/oder Bestimmen der Außentemperaturvorrichtung der Heizvorrichtung durch eine Auswertevorrichtung besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollsystem vorgesehen sein, dass das Kontrollsystem eine Außentemperaturvorrichtung zum Erfassen zumindest eines Außentemperaturwerts umfasst, wobei die Auswertevorrichtung zum Kategorisieren und/oder Bestimmen der Außentemperaturvorrichtung auf Grundlage des erfassten zumindest einen Außentemperaturwerts ausgestaltet ist.

Die Außentemperaturvorrichtung des Kontrollsystems ist bevorzugt als zweite Außentemperaturvorrichtung für einen Vergleich mit der Außentemperaturvorrichtung der Heizvorrichtung zu verstehen. Die Außentemperaturvorrichtung des Kontrollsystems ist bevorzugt als lokale Außentemperaturvorrichtung ausgestaltet. Alternativ oder zusätzlich ist die Außentemperaturvorrichtung des Kontrollsystems als eine Datenschnittstelle zum Abrufen von Außentemperaturdaten ausgestaltet. Die Außentemperaturdaten sind bevorzugt aus einem Netzwerk und/oder über die nachstehende Kommunikationsvorrichtung abrufbar. Die Außentemperaturvorrichtung des Kontrollsystems ermöglicht vorteilhaft eine Kontrolle des zumindest einen Widerstandwerts der Außentemperaturvorrichtung der Heizvorrichtung durch beispielsweise einen Abgleich zwischen den Außentemperaturwerten. Die Außentemperaturvorrichtung des Kontrollsystems ermöglicht somit vorteilhaft ein verbessertes Kategorisieren und/oder Bestimmen der Außentemperaturvorrichtung der Heizvorrichtung durch die Auswertevorrichtung auf Grundlage der erfassten Außentemperaturwerte der Außentemperaturvorrichtung der Heizvorrichtung und der Außentemperaturvorrichtung des Kontrollsystems.

Durch die zeitgleiche Ermittlung von Widerstands- und Außentemperaturwerten erfolgt bevorzugt ein Abgleich mit typischen Verlaufskurven gängiger Außentemperaturvorrichtungen. Mittels entsprechender Best-Fit-Analyse wird die angeschlossene Außentemperaturvorrichtung, insbesondere automatisch und/oder verlässlich, detektiert. Somit ermöglicht das Kontrollsystem bevorzugt eine Verlaufskurve von Widerstandswerten zur Außentemperaturvorrichtung der Heizvorrichtung über einen großen Bereich.

Ein derart ausgestaltetes Kontrollsystem ist durch das Erfassen zumindest eines Außentemperaturwerts durch eine Außentemperaturvorrichtung des Kontrollsystems besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollsystem vorgesehen sein, dass die Erfassungsvorrichtung zum Erfassen zumindest eines Rücklauftemperaturwerts der Heizvorrichtung ausgestaltet ist, wobei eine Vergleichsvorrichtung des Kontrollsystems zum Vergleichen des erfassten zumindest einen Vorlauftemperaturwerts und des erfassten zumindest einen Rücklauftemperaturwerts zur Ermittlung einer Spreizung ausgestaltet ist, wobei die Kontrollvorrichtung zum Anpassen des zumindest einen Widerstandwerts um zumindest einen Offset-Wert auf Grundlage der ermittelten Spreizung ausgestaltet ist.

Der zumindest eine Rücklauftemperaturwert wird in und/oder an einem Rücklaufabschnitt der Heizvorrichtung erfasst. Das Erfassen des zumindest einen Rücklauftemperaturwerts ist bevorzugt als Temperaturmessung an und/oder in einer Rücklaufleitung der Heizvorrichtung, insbesondere als Temperaturmessung eines Fluides in einem Rücklaufabschnitt der Heizvorrichtung, zu verstehen.

Das Erfassen zumindest eines Rücklauftemperaturwerts der Heizvorrichtung durch eine Erfassungsvorrichtung des Kontrollsystems ermöglicht vorteilhaft eine Ermittlung der Spreizung der Heizvorrichtung in einem aktuellen Betriebszustand. Die Spreizung ist bevorzugt als Differenz zwischen einem Vorlauftemperaturwert und einem Rücklauftemperaturwert zu verstehen. Die Erfassungsvorrichtung umfasst für das Erfassen des zumindest einen Vorlauftemperaturwerts und des zumindest einen Rücklauftemperaturwerts bevorzugt zumindest zwei Temperatursensoren.

Das Anpassen des zumindest einen Widerstandwerts um zumindest einen Offset-Wert erfolgt auf Grundlage der ermittelten Spreizung durch die Kontrollvorrichtung, um einen vorteilhaften Betrieb der Heizvorrichtung zu ermöglichen.

Bevorzugt wird die Differenz von Vorlauf- und Rücklauftemperatur zeitgleich zu der vorherrschenden Außentemperatur gegenübergestellt und durch das Kontrollsystem bewertet. Die Bewertung erfolgt bevorzugt automatisiert, insbesondere ohne manuelle und/oder menschliche Analyse, besonders bevorzugt durch entsprechende statistische Verfahren in Anlehnung an typische Spreizungskurven für das Bauwerk und/oder eine spezifische Liegenschaft und/oder die spezifische Heizvorrichtung.

Für eine Heizvorrichtung gibt es eine optimale Spreizung, bei der der zur Erreichung einer Zieltemperatur in dem Bauwerk erforderliche Energieaufwand und/oder Brennstoff minimiert wird. Um die Spreizung im Zeitverlauf zu optimieren wird der zumindest eine Widerstandwert um zumindest einen Offset-Wert durch die Kontrollvorrichtung angepasst. Grundsätzlich ist ein Offset-Wert sowohl mit positivem als auch negativem Wert möglich, jedoch ist eine Verbrauchsminderung in der Regel nur durch einen Offset-Wert möglich, der einem positiven Temperatur-Offset entspricht. Das erfindungsgemäße Kontrollsystem ermöglicht eine Einhaltung und/oder Annäherung der ermittelten Spreizung an die optimalen Werte durch das Kontrollieren der Heizvorrichtung durch die Kontrollvorrichtung. Die angestrebten Werte der Spreizung sind bevorzugt auf der zuvor beschriebenen Speichervorrichtung hinterlegt und/oder über die nachfolgend beschriebene Kommunikationsvorrichtung abrufbar. Ein Vorteil dieser Ausgestaltung des Kontrollsystems ist die bevorzugt autarke Funktionsweise ohne die Notwendigkeit eines manuellen Einwirkens. Bevorzugt ermöglicht das Kontrollsystem zum Beispiel aufgrund einer Nutzungsänderung in dem Bauwerk eine Nachjustierung der Heizvorrichtung. Bevorzugt optimiert das Kontrollsystem die Heizvorrichtung dauerhaft selbst.

Ein derart ausgestaltetes Kontrollsystem ist durch das Vergleichen des erfassten zumindest einen Vorlauftemperaturwerts und des erfassten zumindest einen Rücklauftemperaturwerts zur Ermittlung einer Spreizung durch eine Vergleichsvorrichtung des Kontrollsystems besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollsystem vorgesehen sein, dass das Kontrollsystem eine Kommunikationsvorrichtung zum Initialisieren einer datenkommunizierenden Verbindung umfasst, wobei die Kommunikationsvorrichtung zum Senden und/oder Empfangen von Daten ausgestaltet ist.

Die Kommunikationsvorrichtung ist insbesondere zur Datenkommunikation mit einer Backendvorrichtung und/oder einem mobilen Endgerät ausgestaltet. Bevorzugt wird über die Kommunikationsvorrichtung eine Eingabe eines Benutzers und/oder Anwenders zum Kontrollieren, Steuern und/oder Regeln der Heizvorrichtung durch das Kontrollsystem ermöglicht. Beispielsweise ermöglicht die Kommunikationsvorrichtung eine Eingabe an einem Web-UI einer Backendvorrichtung von zumindest einem Offset-Wert durch einen Anwender. Alternativ oder zusätzlich ermöglicht die Kommunikationsvorrichtung die Freigabe und/oder Ablehnung von vorgeschlagenen Regelungen der Heizvorrichtung durch eine Eingabevorrichtung eines mobilen Endgeräts. Die Kommunikationsvorrichtung ermöglicht bevorzugt das Bereitstellen von Vergleichsdaten für das Kategorisieren und/oder Bestimmen der Außentemperaturvorrichtung der Heizvorrichtung durch die Auswertevorrichtung. Die Kommunikationsvorrichtung ermöglicht bevorzugt eine datenkommunizierende Verbindung mit einer Servervorrichtung zum Senden und/oder Empfangen von Daten, insbesondere Außentemperaturwerte, Regelparameter für die Vorlauftemperaturwerte und/oder die Spreizung. Die datenkommunizierende Verbindung wird bevorzugt über ein Mobilfunknetz, ein kabelgebundenes oder kabelloses Netzwerk, Breitbandnetz und/oder Internet ermöglicht. Ein derart ausgestaltetes Kontrollsystem ist durch das Initialisieren einer datenkommunizierenden Verbindung durch eine Kommunikationsvorrichtung des Kontrollsystems besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollsystem vorgesehen sein, dass das Kontrollsystem eine Regelvorrichtung umfasst, wobei die Regelvorrichtung zum zumindest abschnittsweisen automatischen Regeln der Heizvorrichtung durch Anpassen des zumindest einen Widerstandwerts um den zumindest einen Offset-Wert auf Grundlage des erfassten zumindest einen Vorlauftemperaturwerts und/oder auf Grundlage der ermittelten Spreizung ausgestaltet ist.

Das Regeln der Heizvorrichtung durch eine Regelvorrichtung stellt eine besonders vorteilhafte Weiterentwicklung des Kontrollsystems dar, da ein zumindest abschnittsweise automatisches Anpassen des zumindest einen Widerstandwerts um den zumindest einen Offset-Wert auf Grundlage des erfassten zumindest einen Vorlauftemperaturwerts und/oder auf Grundlage der ermittelten Spreizung durch die Regelvorrichtung ermöglicht wird. Über das Steuern der Heizvorrichtung hinaus wird somit eine Regelung der Heizvorrichtung ermöglicht und damit ein höherer Grad an Automatisierung der Heizvorrichtung und folglich ein Gewinn an Komfort für den Anwender erreicht. Eine erfindungsgemäße Regelung umfasst bevorzugt eine Rückkopplung von zumindest einer der beschriebenen Messgrößen auf das Regeln und/oder an das Kontrollsystem. Ein derart ausgestaltetes Kontrollsystem ist durch das Regeln der Heizvorrichtung durch die Regelvorrichtung besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollsystem vorgesehen sein, dass das Kontrollsystem eine Erkennungsvorrichtung zum Erkennen eines Betriebsfehlers des Kontrollsystems umfasst, wobei die Kontrollvorrichtung und/oder die Erkennungsvorrichtung zum Zurücksetzen des zumindest einen Offset-Werts bei einem erkannten Betriebsfehler ausgestaltet sind.

Ein Betriebsfehler ist im Rahmen der Erfindung bespielhaft als ein Energieausfall des Kontrollsystems, als erfasste Widerstandswerte, Vorlauftemperaturwerte, Rücklauftemperaturwerte, Außentemperaturwerte und/oder weitere Messwerte, die außerhalb eines zulässigen Bereichs für die jeweilige Messgröße liegen, als erfasster Defekt einer Vorrichtung des Kontrollsystems und/oder als anderweitiger Betriebsfehler des Kontrollsystems zu verstehen. Bei einem erkannten Betriebsfehler ermöglicht das Kontrollsystem ein Zurücksetzen des zumindest einen Offset-Werts, sodass keine Anpassung des zumindest einen Widerstandwerts der Außentemperaturvorrichtung der Heizvorrichtung durch einen Offset-Wert mehr erfolgt. Es sei hierbei bevorzugt zu vernachlässigen, dass das Kontrollsystem selbst, durch den Anschluss der Kontrollvorrichtung an der Heizvorrichtung, eine geringfügige Veränderung des Widerstandswerts erzeugt. Ein derart ausgestalteter Failsafe-Modus des Kontrollsystems ermöglicht vorteilhaft eine Minimierung und/oder Vermeidung eines Einflusses des Kontrollsystems auf die Heizvorrichtung, wenn ein Betriebsfehler erkannt wurde und/oder das Kontrollsystem nicht ordnungsgemäß betrieben werden kann. Somit ermöglicht das erfindungsgemäße Kontrollsystem auch bei Ausfall des Kontrollsystems einen fortlaufenden Betrieb der Heizvorrichtung und somit ein größeres Zeitfenster zur Reaktion auf einen Betriebsfehler. Bevorzugt umfasst das Kontrollsystem bevorzugt zumindest ein Relais zum Zurücksetzen des zumindest einen Offset-Werts bei einem erkannten Betriebsfehler. Ein derart ausgestaltetes Kontrollsystem ist durch das Erkennen eines Betriebsfehlers des Kontrollsystems durch eine Erkennungsvorrichtung besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollsystem vorgesehen sein, dass die Kontrollvorrichtung eine Widerstandsvorrichtung und/oder ein Widerstandsnetzwerk zum positiven und/oder negativen Anpassen des zumindest einen Widerstandwerts um den zumindest einen Offset-Wert umfasst.

Wie voranstehend beschrieben, erfolgt das Kontrollieren der Heizvorrichtung durch Anpassen des zumindest einen Widerstandwerts um zumindest einen Offset-Wert durch die Kontrollvorrichtung. Die Kontrollvorrichtung weist eine Widerstandsvorrichtung und/oder ein Widerstandsnetzwerk zum positiven und/oder negativen Anpassen des zumindest einen Widerstandwerts und/oder zum Erzeugen eines positiven und/oder negativen Offset-Werts auf. Beispielhaft umfasst die Kontrollvorrichtung zum Kontrollieren der Heizvorrichtung und/oder die Ermittlungsvorrichtung zum Ermitteln des zumindest einen Widerstandwerts zumindest einen Shuntwiderstand, bevorzugt eine elektrische Schaltung mit einer Vielzahl an Widerständen. Ein positiver Offset-Wert wird bevorzugt mittels Reihenschaltung von zumindest einem Widerstand zu der Außentemperaturvorrichtung ermöglicht. Ein negativer Offset-Wert wird bevorzugt mittels Parallelschaltung von zumindest einem Widerstand zu der Außentemperaturvorrichtung ermöglicht. Bevorzugt umfasst die Kontrollvorrichtung zumindest ein grobes Stellglied für grobe Offset-Wert-Einstellungen und zumindest ein feines Stellglied für feine Offset-Wert-Einstellungen. Ein derart ausgestaltetes Kontrollsystem ist durch die konstruktive Ausgestaltung der Kontrollvorrichtung besonders vorteilhaft, da das Kontrollieren einer Heizvorrichtung für ein Bauwerk durch das Kontrollsystem besonders einfach ermöglicht wird.

Gemäß einer bevorzugten Weiterentwicklung der Erfindung kann bei einem Kontrollsystem vorgesehen sein, dass das Kontrollsystem eine Befestigungsvorrichtung zum nachträglichen, insbesondere nachrüstenden, Befestigen des Kontrollsystems an der Heizvorrichtung umfasst. Erfindungsgemäß ist das Kontrollsystem besonders vorteilhaft zur Nachrüstung mit Bestandsheizungen verwendbar. Bevorzugt ist das Kontrollsystem als ein Nachrüst-Kontrollsystem ausgestaltet. Ein bevorzugtes Ziel der Erfindung ist es, für möglichst viele Heizvorrichtungen einen verbesserten, effizienteren und/oder günstigeren Betrieb und somit bevorzugt einen verringerten Energieeinsatz zu ermöglichen. Das Kontrollsystem wird zum Kontrollieren der Heizvorrichtung bevorzugt durch die Befestigungsvorrichtung an der Heizvorrichtung installiert und/oder befestigt, um die Heizvorrichtung zu kontrollieren. Bevorzugt wird die Kontrollvorrichtung an und/oder in eine Leitung der Außentemperaturvorrichtung der Heizvorrichtung angeschlossen und/oder zwischen geschaltet, um den zumindest einen Widerstandwerts um zumindest einen Offset-Wert anzupassen. Die Befestigungsvorrichtung umfasst bevorzugt zumindest eine Schnittstelle zur Verbindung der Kontrollvorrichtung mit der Außentemperaturvorrichtung der Heizvorrichtung, insbesondere einem Kabel der Außentemperaturvorrichtung. Bevorzugt ist die zumindest eine Schnittstelle als Klemmvorrichtung, Schraubvorrichtung und/oder mit möglichst geringem Innenwiderstand ausgestaltet. Bevorzugt umfasst das Kontrollsystem und/oder die Befestigungsvorrichtung eine Energieschnittstelle zur Energieversorgung des Kontrollsystems. Ein derart ausgestaltetes Kontrollsystem ist durch die Befestigungsvorrichtung der Kontrollvorrichtung besonders vorteilhaft, da das Kontrollieren einer Heizvorrichtung für ein Bauwerk durch das Kontrollsystem besonders einfach ermöglicht wird.

Gemäß einem zweiten Aspekt der Erfindung wird die Aufgabe durch ein Heizsystem zum Heizen eines Bauwerks gelöst. Das Heizsystem weist eine Heizvorrichtung und ein Kontrollsystem auf, wobei das Kontrollsystem gemäß dem ersten Aspekt ausgestaltet ist.

Bei dem beschriebenen Heizsystem ergeben sich sämtliche Vorteile, die bereits zu dem Kontrollsystem gemäß dem ersten Aspekt der Erfindung beschrieben worden sind.

Ein erfindungsgemäßes Kontrollsystem sowie ein Heizsystem werden nachfolgend anhand von Zeichnungen näher erläutert. Es zeigen jeweils schematisch:
- Figur 1: in einer funktionalen Ansicht eine Heizvorrichtung in einem Bauwerk, eine Außentemperaturvorrichtung der Heizvorrichtung und ein Kontrollsystem,
- Figur 2: in einer funktionalen Ansicht eine Heizvorrichtung mit einer Außentemperaturvorrichtung und einem Kontrollsystem, und
- Figur 3: in einer funktionalen Ansicht ein Heizsystem mit einer Heizvorrichtung und einem Kontrollsystem.

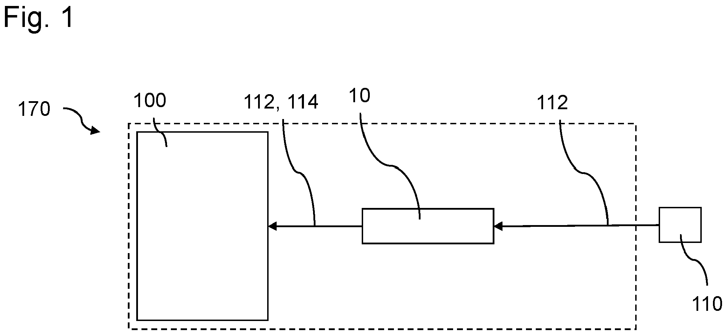

Elemente mit gleicher Funktion und Wirkungsweise sind in den Fig. 1 bis 3 jeweils mit denselben Bezugszeichen versehen.

In Fig. 1 ist schematisch in einer funktionalen Ansicht eine Heizvorrichtung 100 in einem Bauwerk 170, eine Außentemperaturvorrichtung 110 der Heizvorrichtung 100 und ein Kontrollsystem 10 gezeigt. Das Kontrollsystem 10 ist zum Kontrollieren der Heizvorrichtung 100 ausgestaltet und zwischen die Heizvorrichtung 100 und die Außentemperaturvorrichtung 110 geschaltet. Das Kontrollsystem 10 ist zum Kontrollieren der Heizvorrichtung 100 durch Anpassen des Widerstandwerts 112 der Außentemperaturvorrichtung 110 um einen Offset-Wert 114 ausgestaltet.

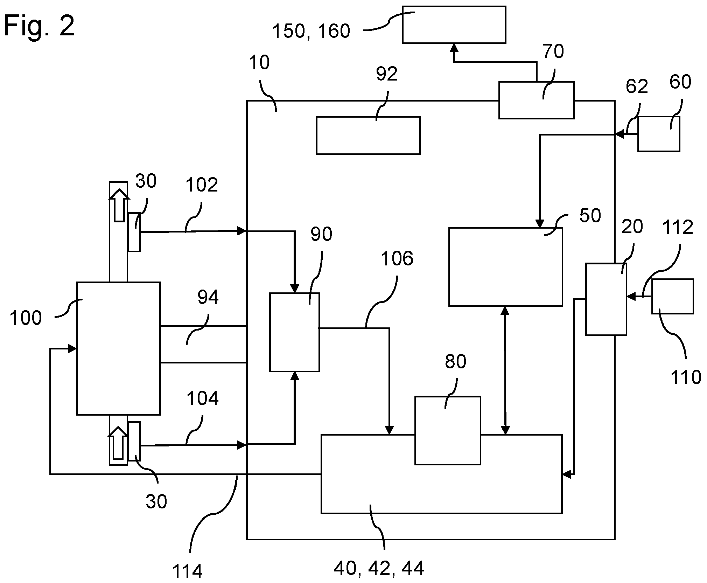

In Fig. 2 ist schematisch in einer funktionalen Ansicht eine Heizvorrichtung 100 mit einer Außentemperaturvorrichtung 110 und einem Kontrollsystem 10 gezeigt. Das Kontrollsystem 10 ist zum Kontrollieren der Heizvorrichtung 100 ausgestaltet. Das Kontrollsystem 10 umfasst eine Ermittlungsvorrichtung 20 zum Ermitteln eines Widerstandwerts 112 einer Außentemperaturvorrichtung 110 der Heizvorrichtung 100. Das Kontrollsystem 10 umfasst ferner eine Kontrollvorrichtung 40 zum Kontrollieren der Heizvorrichtung 100, wobei das Kontrollieren durch Anpassen des Widerstandwerts 112 um einen Offset-Wert 114 durch die Kontrollvorrichtung 40 erfolgt. Das Kontrollsystem 10 umfasst ferner eine Erfassungsvorrichtung 30 zum Erfassen eines Vorlauftemperaturwerts 102 der Heizvorrichtung 100, wobei das Kontrollieren durch Anpassen des Widerstandwerts 112 um den Offset-Wert 114 auf Grundlage des erfassten Vorlauftemperaturwerts 102 durch die Kontrollvorrichtung 40 erfolgt. Das Kontrollsystem 10 umfasst ferner eine Auswertevorrichtung 50 zum Auswerten des Widerstandwerts 112 zum Bestimmen der Außentemperaturvorrichtung 110 der Heizvorrichtung 100. Die Auswertevorrichtung 50 ist ferner zum Erfassen eines Außentemperaturwerts 62 durch eine Außentemperaturvorrichtung 60 des Kontrollsystems 10 ausgestaltet, wobei das Bestimmen der Außentemperaturvorrichtung 110 der Heizvorrichtung 100 durch die Auswertevorrichtung 50 auf Grundlage des erfassten Außentemperaturwerts 62 der Außentemperaturvorrichtung 60 des Kontrollsystems 10 erfolgt. Die Erfassungsvorrichtung 30 des Kontrollsystems 10 ist ferner zum Erfassen eines Rücklauftemperaturwerts 104 der Heizvorrichtung 100 ausgestaltet. Die Erfassungsvorrichtung 30 ist beispielhaft zweiteilig ausgestaltet. Das Kontrollsystem 10 umfasst ferner eine Vergleichsvorrichtung 90 zum Vergleichen des erfassten Vorlauftemperaturwerts 102 und des erfassten Rücklauftemperaturwerts 104 zur Ermittlung einer Spreizung 106 durch die Vergleichsvorrichtung 90, wobei das Anpassen des Widerstandwerts 112 um den Offset-Wert 114 auf Grundlage der ermittelten Spreizung 106 durch die Kontrollvorrichtung 40 erfolgt. Das Kontrollsystem 10 umfasst ferner eine Kommunikationsvorrichtung 70 zum Initialisieren einer datenkommunizierenden Verbindung, wobei die Kommunikationsvorrichtung 70 zum Senden und Empfangen von Daten ausgestaltet ist. Die Kommunikationsvorrichtung 70 ist zur Datenkommunikation mit einer Backendvorrichtung 150 und einem mobilen Endgerät 160 ausgestaltet. Das Kontrollsystem 10 umfasst ferner eine Regelvorrichtung 80 zum Regeln der Heizvorrichtung 100, wobei das Regeln durch Anpassen des Widerstandwerts 112 um den Offset-Wert 114 auf Grundlage des erfassten Vorlauftemperaturwerts 102 und auf Grundlage der ermittelten Spreizung 106 durch die Regelvorrichtung 80 automatisch erfolgt. Die Kontrollvorrichtung 40 ist zum Anpassen des Widerstandwerts 112 um den Offset-Wert 114 ausgestaltet, wobei die Kontrollvorrichtung 40 eine Widerstandsvorrichtung 42 und ein Widerstandsnetzwerk 44 zum positiven und negativen Anpassen des Widerstandwerts 112 umfasst. Das Kontrollsystem 10 umfasst ferner eine Erkennungsvorrichtung 92 zum Erkennen eines Betriebsfehlers des Kontrollsystems 10, wobei bei einem erkannten Betriebsfehler ein Zurücksetzen des Offset-Werts 114 durch die Kontrollvorrichtung 40 erfolgt. Das Kontrollsystem 10 umfasst ferner eine Befestigungsvorrichtung 94 zum nachträglichen Befestigen des Kontrollsystems 10 an der Heizvorrichtung 100.

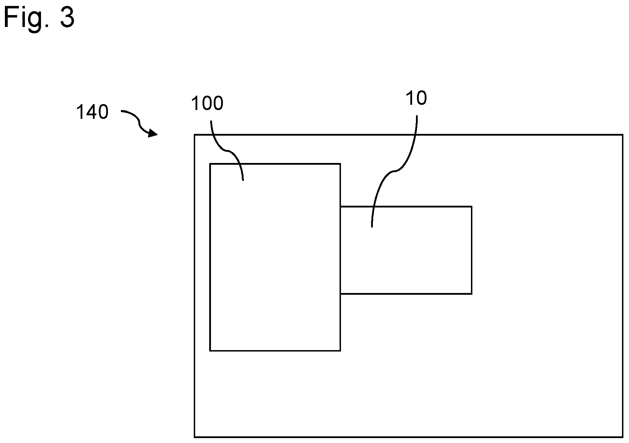

In Fig. 3 ist schematisch in einer funktionalen Ansicht ein Heizsystem 140 mit einer Heizvorrichtung 100 und einem Kontrollsystem 10 gezeigt. Das Kontrollsystem 10 ist nachgerüstet an der Heizvorrichtung 100 installiert worden.

### Bezugszeichenliste

- 10: Kontrollsystem
- 20: Ermittlungsvorrichtung
- 30: Erfassungsvorrichtung
- 40: Kontrollvorrichtung
- 42: Widerstandsvorrichtung
- 44: Widerstandsnetzwerk
- 50: Auswertevorrichtung
- 60: Außentemperaturvorrichtung des Kontrollsystems
- 62: Außentemperaturwert
- 70: Kommunikationsvorrichtung
- 80: Regelvorrichtung
- 90: Vergleichsvorrichtung
- 92: Erkennungsvorrichtung
- 94: Befestigungsvorrichtung
- 100: Heizvorrichtung
- 102: Vorlauftemperaturwert
- 104: Rücklauftemperaturwert
- 106: Spreizung
- 110: Außentemperaturvorrichtung der Heizvorrichtung
- 112: Widerstandwert
- 114: Offset-Wert
- 140: Heizsystem
- 150: Backendvorrichtung
- 160: mobiles Endgerät
- 170: Bauwerk

## Patentansprüche

1. Kontrollsystem (10) zum Kontrollieren einer Heizvorrichtung (100) für ein Bauwerk (170), das Kontrollsystem (10) aufweisend eine Ermittlungsvorrichtung (20) zum Ermitteln zumindest eines Widerstandwerts (112) einer Außentemperaturvorrichtung (110) der Heizvorrichtung (100) und eine Kontrollvorrichtung (40) zum Kontrollieren der Heizvorrichtung (100) durch Anpassen des zumindest einen Widerstandwerts (112) um zumindest einen Offset-Wert (114).

2. Kontrollsystem (10) nach Anspruch 1,
**dadurch gekennzeichnet,**
**dass** das Kontrollsystem (10) eine Erfassungsvorrichtung (30) zum Erfassen zumindest eines Vorlauftemperaturwerts (102) der Heizvorrichtung (100) umfasst, wobei die Kontrollvorrichtung (40) zum Anpassen des zumindest einen Widerstandwerts (112) um zumindest einen Offset-Wert (114) auf Grundlage des erfassten zumindest einen Vorlauftemperaturwerts (102) ausgestaltet ist.

3. Kontrollsystem (10) nach einem der vorangegangenen Ansprüche,
**dadurch gekennzeichnet,**
**dass** das Kontrollsystem (10) eine Auswertevorrichtung (50) zum Auswerten des zumindest einen Widerstandwerts (112) zum Kategorisieren und/oder Bestimmen der Außentemperaturvorrichtung (110) der Heizvorrichtung (100) umfasst.

4. Kontrollsystem (10) nach Anspruch 3,
**dadurch gekennzeichnet,**
**dass** das Kontrollsystem (10) eine Außentemperaturvorrichtung (60) zum Erfassen zumindest eines Außentemperaturwerts (62) umfasst, wobei die Auswertevorrichtung (50) zum Kategorisieren und/oder Bestimmen der Außentemperaturvorrichtung (110) auf Grundlage des erfassten zumindest einen Außentemperaturwerts (62) ausgestaltet ist.

5. Kontrollsystem (10) nach einem der vorangegangenen Ansprüche 2 bis 4,
**dadurch gekennzeichnet,**
**dass** die Erfassungsvorrichtung (30) zum Erfassen zumindest eines Rücklauftemperaturwerts (104) der Heizvorrichtung (100) ausgestaltet ist, wobei eine Vergleichsvorrichtung (90) des Kontrollsystems (10) zum Vergleichen des erfassten zumindest einen Vorlauftemperaturwerts (102) und des erfassten zumindest einen Rücklauftemperaturwerts (104) zur Ermittlung einer Spreizung (106) ausgestaltet ist, wobei die Kontrollvorrichtung (40) zum Anpassen des zumindest einen Widerstandwerts (112) um zumindest einen Offset-Wert (114) auf Grundlage der ermittelten Spreizung (106) ausgestaltet ist.

6. Kontrollsystem (10) nach einem der vorangegangenen Ansprüche,
**dadurch gekennzeichnet,**
**dass** das Kontrollsystem (10) eine Kommunikationsvorrichtung (70) zum Initialisieren einer datenkommunizierenden Verbindung umfasst, wobei die Kommunikationsvorrichtung (70) zum Senden und/oder Empfangen von Daten ausgestaltet ist.

7. Kontrollsystem (10) nach einem der vorangegangenen Ansprüche,
**dadurch gekennzeichnet,**
**dass** das Kontrollsystem (10) eine Regelvorrichtung (80) umfasst, wobei die Regelvorrichtung (80) zum zumindest abschnittsweisen automatischen Regeln der Heizvorrichtung (100) durch Anpassen des zumindest einen Widerstandwerts (112) um den zumindest einen Offset-Wert (114) auf Grundlage des erfassten zumindest einen Vorlauftemperaturwerts (102) und/oder auf Grundlage der ermittelten Spreizung (106) ausgestaltet ist.

8. Kontrollsystem (10) nach einem der vorangegangenen Ansprüche,
**dadurch gekennzeichnet,**
**dass** das Kontrollsystem (10) eine Erkennungsvorrichtung (92) zum Erkennen eines Betriebsfehlers des Kontrollsystems (10) umfasst, wobei die Kontrollvorrichtung (40) und/oder die Erkennungsvorrichtung (92) zum Zurücksetzen des zumindest einen Offset-Werts (114) bei einem erkannten Betriebsfehler ausgestaltet sind.

9. Kontrollsystem (10) nach einem der vorangegangenen Ansprüche,
**dadurch gekennzeichnet,**
**dass** die Kontrollvorrichtung (40) eine Widerstandsvorrichtung (42) und/oder ein Widerstandsnetzwerk (44) zum positiven und/oder negativen Anpassen des zumindest einen Widerstandwerts (112) um den zumindest einen Offset-Wert (114) umfasst.

10. Kontrollsystem (10) nach einem der vorangegangenen Ansprüche,
**dadurch gekennzeichnet,**
**dass** das Kontrollsystem (10) eine Befestigungsvorrichtung (94) zum nachträglichen Befestigen des Kontrollsystems (10) an der Heizvorrichtung (100) umfasst.

11. Heizsystem (140) zum Heizen eines Bauwerks (170), das Heizsystem (140) umfassend eine Heizvorrichtung (100) und ein Kontrollsystem (10),
**dadurch gekennzeichnet,**
**dass** das Kontrollsystem (10) nach einem der vorangegangenen Ansprüche ausgestaltet ist.
